# EUROPEAN PATENT APPLICATION

(11) **EP 2 571 229 A1**
(43) Date of publication of application: **20.03.2013**
(21) Application number: 10851288.0
(22) Date of filing: 21.10.2010
(51) Int. Cl.: H04L 29/08

(54) **METHOD FOR SCREENING MOBILE TERMINAL FROM ACCESSING WIRELESS NETWORK INFORMATION, MOBILE TERMINAL AND SYSTEM THEREOF**

(30) Priority: 11.05.2010 CN 201010174769
(71) Applicant: ZTE Corporation, Shenzhen, Guangdong 518057 (CN)
(72) Inventor: JIANG, Min, Shenzhen Guangdong 518057 (CN); DUAN, Yongjian, Shenzhen Guangdong 518057 (CN); MENG, Zhao, Shenzhen Guangdong 518057 (CN)
(74) Representative: Hoyle, Benjamin James
(86) International application number: PCT/CN2010/077947
(87) International publication number: WO 2011/140784

(57) **Abstract**

The present invention relates to the technical field of information processing and provides a method for shielding a mobile terminal from accessing wireless network information, which is applied to ensure the mobile terminal to shield the information in a wireless network. The method comprises the steps of: receiving an access command and acquiring a corresponding domain name according to a webpage address in the access command; querying a domain name evaluation record of the domain name and acquiring evaluation of the domain name, wherein the domain name evaluation record comprises the domain name and the evaluation of the domain name; and generating a prompt according to the evaluation of the domain name. The present invention also provides a mobile terminal capable of shielding the information in the wireless network. The present invention also provides a system for shielding the mobile terminal from accessing the wireless network information.

## Description

### Field of the Invention

The present invention relates to the technical field of information processing, and in particular to a mobile terminal, a method and system for shielding a mobile terminal from accessing wireless network information.

### Background of the Invention

With the continuous development of the communication technology, wireless Internet access can be implemented and rapidly developed, and it takes an important effect in daily life and work of people. However, different from a conventional communication network, the wireless Internet includes a great amount of independent Wireless Application Protocol (WAP) websites (such as mobile phone websites) and World Wide Web (WWW) websites. These websites operate independently and can be directly or indirectly connected into the wireless Internet by various modes without signing the contract with telecom operators. Currently, thousands of the websites exist, contents broadcast by the websites are more and more complex, the websites are of varying quality and both bad and good websites are mixed up. The matched supervision measures and technical means are not completely provided and cannot be mentioned in the same breath with the supervision mechanism for the fixed Internet, which is formed by years of comprehensive treatment, so that loopholes are provided for criminals to spread obscene, pornographic and violent information and the social "cancer" is formed.

Due to low frequency of a Central Processing Unit (CPU) and small memory space of embedded systems such as mobile terminals (e.g., a mobile phone, a Personal Digital Assistant (PDA) etc..) and the like, browsers operating on the mobile terminals generally only have a function of browsing the web and cannot be used for shielding obscene, pornographic, violent and illegal websites. However, the mobile terminals such as the mobile phone and the like are very common and most of users have a habit of spending leisure time in a mode of surfing the Internet by the mobile phones, so the user possibly contact the pornographic and violent information. Specifically, part of people (specifically, teenagers and the like) are short of awareness of preventing the violent and pornographic websites, and if the people are addicted to the violent and pornographic websites for a long time, the study and life can be seriously influenced so as to cause serious social problems.

### Summary of the Invention

The present invention provides a mobile terminal, a method and a system for shielding a mobile terminal from accessing wireless network information, thus the information in a wireless network is shielded according to the requirements of users.

The present invention provides a method for shielding a mobile terminal from accessing the wireless network information, which is used for shielding the information in the wireless network for the mobile terminal. The mobile terminal is provided with a browser configured to access the wireless network. The method comprises:
receiving an access command and acquiring a corresponding domain name according to a webpage address in the access command;
querying a domain name evaluation record of the domain name and acquiring evaluation of the domain name, wherein the domain name evaluation record includes the domain name and the evaluation of the domain name; and
generating a prompt according to the evaluation of the domain name.

Preferably, after the step of querying the domain name evaluation record of the domain name is executed, the method further comprises:
storing the domain name evaluation record in a cache of the mobile terminal.

Preferably, the domain name evaluation record is acquired in a mode that a domain name evaluation server connected with the mobile terminal accesses a website corresponding to the domain name and evaluates.

Preferably, the step of querying the domain name evaluation record of the domain name and acquiring the evaluation of the domain name comprises:
querying whether the domain name evaluation record of the domain name exists in the cache of the mobile terminal;
when the domain name evaluation record of the domain name exists in the cache, acquiring the evaluation of the domain name according to the domain name evaluation record; and
when the domain name evaluation record of the domain name does not exist in the cache, querying the domain name evaluation record of the domain name from the domain name evaluation server connected with the mobile terminal and acquiring the evaluation of the domain name.

The present invention also provides a mobile terminal, comprises a browser configured to access the wireless network. The mobile terminal further comprises: a domain name resolution unit, a domain name query unit and an access prompting unit, wherein
the domain name resolution unit is configured to receive a access command and acquire the corresponding domain name according to the webpage address in the access command;
the domain name query unit is configured to query a domain name evaluation record of the domain name and acquire the evaluation of the domain name; the domain name evaluation record comprises the domain name and the evaluation of the domain name; and
the access prompting unit is configured to generate a prompt according to the evaluation of the domain name.

Preferably, the mobile terminal further comprises:
a cache unit configured to store the domain name evaluation record after the domain name query unit queries the domain name evaluation record of the domain name.

Preferably, the domain name evaluation record is acquired in a mode that a domain name evaluation server connected with the mobile terminal accesses the website corresponding to the domain name and evaluates.

Preferably, the query unit comprises a cache query module and a switching module, wherein
the cache query module is configured to query whether the domain name evaluation record of the domain name exists in the cache unit of the mobile terminal; and
the switching module is configured to acquire the evaluation of the domain name according to the domain name evaluation record when the domain name evaluation record of the domain name exists in the cache unit, and query the domain name evaluation record of the domain name from the domain name evaluation server connected with the mobile terminal and acquire the evaluation of the domain name when the domain name evaluation record of the domain name does not exist in the cache unit.

The present invention also provides a system for shielding the mobile terminal from accessing the wireless network information in the wireless network, the system comprises a mobile terminal and a domain name evaluation server, wherein
the domain name evaluation server is configured to acquire a domain name evaluation record by accessing a website corresponding to the domain name and evaluating and store the domain name evaluation record; the domain name evaluation record comprises the domain name and the evaluation of the domain name; and
the mobile terminal is provided with a browser configured to access the wireless network, and the mobile terminal further comprises a domain name resolution unit, a domain name query unit and a access prompting unit, wherein
the domain name resolution unit is configured to receive a access command and acquire the corresponding domain name according to a webpage address in the access command;
the domain name query unit is configured to query the domain name evaluation record of the domain name and acquire the evaluation of the domain name; and
the access prompting unit is configured to generate the prompt according to the evaluation of the domain name.

Preferably, the domain name evaluation server comprises a timing updating unit configured to be started at time intervals to access the network, acquire the evaluation record of the website corresponding to the domain name and store the evaluation record.

According to the method for shielding the mobile terminal from accessing the wireless network information, the mobile terminal or the system for shielding the mobile terminal from accessing the wireless network information, which is disclosed by the present invention, the domain name is acquired by resolving the webpage address, so that when the website is accessed, the browser firstly queries the domain name evaluation record of the domain name to acquire the evaluation of the website to be accessed and the user can select to stop accessing the website according to the evaluation to shield the information; furthermore, the browser can store the domain name evaluation record into the mobile terminal, and when accessing the webpage address next time, the browser firstly queries the mobile terminal and queries the domain name evaluation record related to the domain name in the domain name evaluation server if the evaluation record of the domain name corresponding to the webpage address to be accessed does not exist in the mobile terminal so as to further shield the information in the wireless network.

### Brief Description of the Drawings

Fig. 1 shows a flowchart of a method for shielding a mobile terminal from accessing wireless network information according to an embodiment of the present invention;
Fig. 2 shows a flowchart of a method for querying a domain name evaluation record and acquiring evaluation of a domain name according to an embodiment of the present invention;
Fig. 3 shows a structural diagram of a mobile terminal according to an embodiment of the present invention;
Fig. 4 shows a structural diagram of a mobile terminal according to another embodiment of the present invention; and
Fig. 5 shows a structural diagram of a system for shielding the mobile terminal from accessing the wireless network information according to an embodiment of the present invention.

### Detailed Description of the Embodiments

The implementation of the aims, the functional characteristics and the advantages of the present invention are further illustrated with reference to the accompanying drawings by combining embodiments.

In the present invention, the mobile terminal can be a mobile phone, a Personal Digital Assistant (PDA) and the like, and the network can be a Wireless Application Protocol (WAP), a World Wide Web (WWW) and the like. By taking the mobile phone as the example, a method for shielding the mobile terminal from accessing wireless network information, the mobile terminal and a system for shielding the mobile terminal from accessing the wireless network information, which are disclosed by the present invention, are described in details as below. It should be understood that the specific embodiments described herein are only used to explain the present invention and shall not be construed as improper limitations on the same.

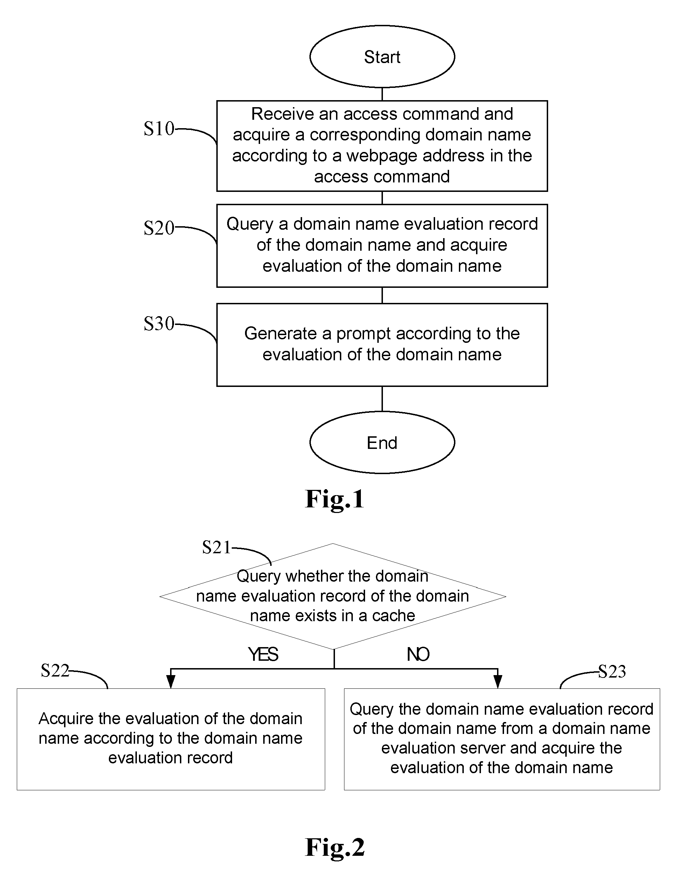

Fig. 1 shows a flowchart of a method for shielding the mobile terminal from accessing the wireless network information according to an embodiment of the present invention, which is applied for the mobile terminal shielding the information in a wireless network. The mobile terminal is provided with a browser configured to access the wireless network. The method comprises the following steps:
Step 10: the browser receives an access command and acquires a corresponding domain name according to a webpage address in the access command; in one embodiment, a domain name resolution function can be implemented by devices such as a Domain Name System (DNS) and the like, for example, if the webpage address is http://www.xxx.com/news, the corresponding domain name, i.e. www.xxx.com, can be acquired by the DNS.
Step 20: a domain name evaluation record of the domain name is queried and evaluation of the domain name is acquired; the domain name evaluation record comprises the domain name and the evaluation of the domain name; a format of the domain name evaluation record can make reference to the Table 1:

**Table 1**

| Domain name | Violence | Pornography | Illegality | ... |
|---|---|---|---|---|
| www.xxx.com | Yes | No | No | ... |
| www.yyy.com.cn | No | Yes | No | ... |
| www.sina.com | No | No | No | No |
| ... | ... | ... | ... | ... |

There are various modes of acquiring the domain name evaluation record. For example, in one embodiment, a website corresponding to the domain name can be accessed, graphics and texts are identified mutually and the domain name evaluation record with the format shown in the Table 1 is established and stored in a database. In another embodiment, contents in the website can also be acquired and compared by a graphic-text comparing technology so as to acquire the domain name evaluation record and store the domain name evaluation record in the database. The link between the mobile terminal and the database can be established by communication protocols such as a Hyper Text Transfer Protocol (HTTP), a File Transfer Protocol (FTP) and the like so as to query the domain name evaluation record.

There are various options for the format of the Table 1. Preset conditions such as violence, pornography, illegality and the like in the Table 1 can be set according to the requirements of a user, which are not detailed here.

Step 30: a prompt is generated according to the evaluation of the domain name. In an embodiment, if the webpage address to be accessed is http://www.xxx.com/news and the evaluation that the domain name www.xxx.com of the website has violence information exists in the domain name evaluation record, the evaluation is displayed to prompt the user that if the user accesses the website, both the body and the mind of the user are possibly damaged, so that the user can select not to access the website to shield the harmful information. If the violent, pornographic and illegal harmful information does not exist in the website to be accessed, for example, the website to be accessed is http://www.sina.com and the evaluation of the domain name www.sina.com in the domain name evaluation record is normal, the browser directly accesses the website.

By the method, the user can firstly acquire the evaluation of the website to be accessed when accessing the wireless network and can select to stop accessing the website according to the evaluation so as to shield the harmful information, purify the network environment and guarantee the physical and psychological health of the user.

In the embodiment, Step 20 can further comprises a step of the domain name evaluation record is stored in a cache. For example, if acquiring the domain name evaluation of the webpage address corresponding to the domain name by querying the domain name evaluation record, the browser stores the domain name evaluation in the cache for prompting when accessing next time. In the embodiment, the browser is set to firstly query the cache so as to acquire the evaluation of the website corresponding to the domain name, thereby improving the query speed of the domain name evaluation record.

In the embodiment, the domain name evaluation record can be acquired in a mode that a domain name evaluation server accesses the website corresponding to the domain name and evaluates. The domain name evaluation server is a server which is provided by an operator and is configured to carry out related evaluation on the domain name. By accessing all websites, the domain name evaluation server records evaluation information of the websites corresponding to different domain names, for example, whether the pornographic, violent and illegal information exists on the website corresponding to the domain name is recorded. The domain name evaluation server can provide a function of querying the domain name and return the evaluation information of the domain name, i.e. the website with the domain name is a violent, pornographic and illegal website or not. The domain name evaluation server can be provided by the country or a telecom operation corporation. The domain name information can be updated by manually carrying out analysis evaluation and can also be updated by carrying out analysis evaluation on different website domain names according to different modes such as keywords, image identification and the like.

As shown in Fig. 2, Step 20 further comprises the steps of:
Step 21: the browser queries whether the domain name evaluation record of the domain name exists in the cache; for example, in the embodiment, the browser can store the evaluation record of the website corresponding to the domain name when accessing the website last time to the cache so as to query the evaluation record when accessing the website next time. The speed of acquiring the evaluation of the website can be improved by querying a local record.
Step 22: when the domain name evaluation record of the domain name exists in the cache, the evaluation of the domain name is acquired according to the domain name evaluation record; and if the domain name evaluation record exists in the cache, the browser prompts or directly accesses the webpage according to the evaluation corresponding to the domain name.
Step 23: when the domain name evaluation record does not exist in the cache, the domain name evaluation record of the domain name is queried from the domain name evaluation server to acquire the evaluation of the domain name. If the evaluation of the website corresponding to the domain name does not exist in the cache, the domain name evaluation record is queried from the domain name evaluation server to acquire the evaluation of the domain name and then the browser prompts or directly accesses the webpage.

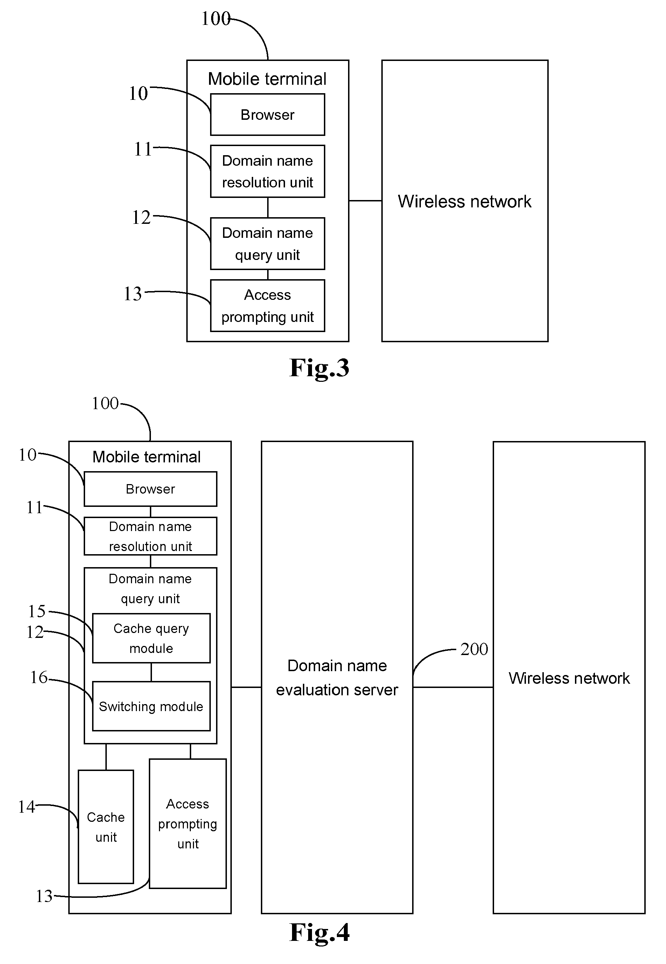

Fig. 3 shows the structure of a mobile terminal 100 according to another embodiment of the present invention. The mobile terminal 100 comprises a browser 10 configured to access wireless networks and shield the information in the wireless networks. The mobile terminal 100 further comprises a domain name resolution unit 11, a domain name query unit 12 and an access prompting unit 13, wherein
the domain name resolution unit 11 is configured to receive the access command and acquire the corresponding domain name according to the webpage address in the access command; in one embodiment, the domain name resolution unit 11 can extract the domain name in the webpage address according to the access command input into the browser 10, for example, in the embodiment, if the webpage address input into the browser 10 is http://www.xxx.com/news, the domain name www.xxx.com can be acquired by the domain name resolution unit 11. In a specific example, in the domain name resolution unit 11, the domain name resolution function can be implemented by devices such as the DNS and the like.

The domain name query unit 12 is configured to query the domain name evaluation record of the domain name and acquire the evaluation of the domain name; the domain name evaluation record comprises the domain name and the evaluation of the domain name; in one embodiment, by the domain name query unit 12, an access relation between the browser 10 and the database or the domain name evaluation server can be established and the domain name evaluation record is extracted from the database or the domain name evaluation server so as to query the evaluation of the website corresponding to the domain name.

The access prompting unit 13 is configured to generate a prompt according to the evaluation of the domain name. For example, if a result that the obscene, violent or illegal information exists on the website to be accessed is obtained by carrying out query via the domain name query unit 12, the prompt of the harmful information is displayed by the access prompting unit 13 through a display screen of the mobile phone, or the harmful information is subjected to alarm prompting by voice and the like, so that the user stops continuously accessing the website to be accessed to shield the information.

As shown in Fig. 4, in one embodiment, the mobile terminal 100 further comprises a cache unit 14 configured to store the domain name evaluation record. In general, for accelerating to browser, the browser of the existing mobile phone is provided with the browser cache configured to store documents requested recently into a user disk, and thus, when a visitor requests the page again, the browser can display the documents from the local disk so as to accelerate to browser the page. In the present invention, the evaluation obtained when the website was accessed last time can be stored by the cache of the browser so as to be queried when the website is accessed next time. The domain name query unit 12 further comprises a cache query module 15 and a switching module 16, wherein the cache query module 15 is configured to query the domain name evaluation record in the cache unit 14 to acquire the evaluation of the domain name before the website is accessed next time, thus the speed of querying the domain name can be improved by utilizing the cache query module 15.
the switching module 16 is configured to acquire the evaluation of the domain name according to the domain name evaluation record when the domain name evaluation record exists in the cache unit 14, and query the domain name evaluation record of the domain name from the domain name evaluation server 200 and acquire the evaluation of the domain name when the domain name evaluation record does not exist in the cache unit 14.

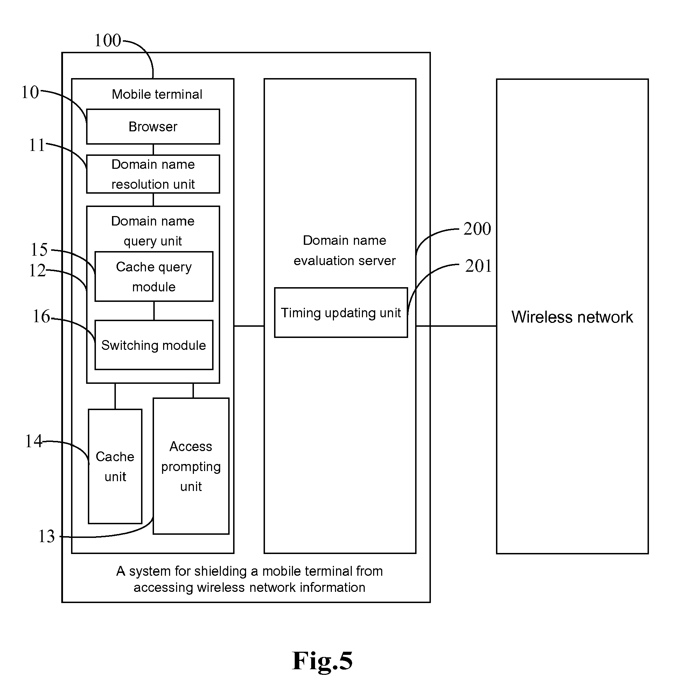

The present invention also provides a system for shielding the mobile terminal from accessing the wireless network information. The system comprises the mobile terminal 100 and the domain name evaluation server 200. As shown in Fig. 5, in one embodiment, the domain name evaluation server 200 is configured to acquire the domain name evaluation record by accessing the website corresponding to the domain name and evaluating and store the domain name evaluation record. The domain name evaluation server 200 communicates with wireless networks by the HTTP, the FTP and the like. The evaluation information of the websites corresponding to different domain names is recorded by accessing all the websites, for example, whether the pornographic, violent and illegal information exists on the website corresponding to the domain name is recorded. The domain name evaluation server can provide the function of querying the domain name and return the evaluation information of the domain name, i.e. the website with the domain name is a violent, pornographic and illegal website or not. The domain name evaluation server can be provided by the country or the telecom operation corporation. The domain name information can be updated by manually carrying out analysis evaluation and can also be updated by carrying out analysis evaluation on different website domain names according to different modes such as keywords, image identification and the like.

In the network, the websites are updated frequently. For acquiring more comprehensive website health information, the website needs to be accessed according to the continuously updated webpage address to extract the domain name of the website and the website health information so as to continuously update the domain name evaluation record. On this basis, the present invention provides another embodiment. In the embodiment, the domain name evaluation server further comprises a timing updating unit 201 configured to be started at time intervals to access the network, acquire the evaluation of the website and update the domain name evaluation record.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention..

## Claims

1. A method for shielding a mobile terminal from accessing wireless network information, applied for the mobile terminal shielding the information in a wireless network, **characterized by** comprising:
receiving an access command and acquiring a corresponding domain name according to a webpage address in the access command;
querying a domain name evaluation record of the domain name and acquiring evaluation of the domain name, wherein the domain name evaluation record comprises the domain name and the evaluation of the domain name; and
generating a prompt according to the evaluation of the domain name.

2. The method for shielding the mobile terminal from accessing the wireless network information according to claim 1, **characterized in that** after the step of querying the domain name evaluation record of the domain name is executed, the method further comprises:
storing the domain name evaluation record in a cache of the mobile terminal.

3. The method for shielding the mobile terminal from accessing the wireless network information according to claim 2, **characterized in that** the domain name evaluation record is acquired in a mode that a domain name evaluation server connected with the mobile terminal accesses a website corresponding to the domain name and evaluates.

4. The method for shielding the mobile terminal from accessing the wireless network information according to any one of claims 1 to 3, **characterized in that** the step of querying the domain name evaluation record of the domain name and acquiring the evaluation of the domain name comprises:
querying whether the domain name evaluation record of the domain name exists in the cache of the mobile terminal;
when the domain name evaluation record of the domain name exists in the cache, acquiring the evaluation of the domain name according to the domain name evaluation record; and
when the domain name evaluation record of the domain name does not exist in the cache, querying the domain name evaluation record of the domain name from the domain name evaluation server connected with the mobile terminal and acquiring the evaluation of the domain name.

5. The mobile terminal, **characterized by** comprising: a domain name resolution unit, a domain name query unit and an access prompting unit, wherein
the domain name resolution unit is configured to receive the access command and acquire the corresponding domain name according to the webpage address in the access command;
the domain name query unit is configured to query the domain name evaluation record of the domain name and acquire the evaluation of the domain name; wherein the domain name evaluation record comprises the domain name and the evaluation of the domain name; and
the access prompting unit is configured to generate a prompt according to the evaluation of the domain name.

6. The mobile terminal according to claim 5, **characterized in that** the mobile terminal further comprising:
a cache unit, configured to store the domain name evaluation record after the domain name query unit queries the domain name evaluation record of the domain name.

7. The mobile terminal according to claim 5, **characterized in that** the domain name evaluation record is acquired in a mode that the domain name evaluation server connected with the mobile terminal accesses the website corresponding to the domain name and evaluates.

8. The mobile terminal according to any one of claims 5 to 7, **characterized in that** the domain name query unit comprises: a cache query module and a switching module, wherein
the cache query module is configured to query whether the domain name evaluation record of the domain name exists in the cache unit of the mobile terminal; and
the switching module is configured to acquire the evaluation of the domain name according to the domain name evaluation record when the domain name evaluation record of the domain name exists in the cache unit, and query the domain name evaluation record of the domain name from the domain name evaluation server connected with the mobile terminal and acquire the evaluation of the domain name when the domain name evaluation record of the domain name does not exist in the cache unit.

9. A system for shielding a mobile terminal from accessing the wireless network information, **characterized by** comprising: a mobile terminal and a domain name evaluation server, wherein
the domain name evaluation server is configured to acquire a domain name evaluation record by accessing a website corresponding to a domain name and evaluating and store the domain name evaluation record; wherein the domain name evaluation record comprises the domain name and the evaluation of the domain name; and
the mobile terminal comprises: a domain name resolution unit, a domain name query unit and an access prompting unit, wherein
the domain name resolution unit is configured to receive an access command and acquire a corresponding domain name according to a webpage address in the access command;
the domain name query unit is configured to query the domain name evaluation record of the domain name and acquire the evaluation of the domain name; and
the access prompting unit is configured to generate a prompt according to the evaluation of the domain name.

10. The system for shielding the mobile terminal from accessing the wireless network information according to claim 9, **characterized in that** the domain name evaluation server comprises: a timing updating unit, configured to be started at time intervals to access all the networks, acquire the evaluation records of the websites corresponding to the domain names and store the evaluation records.
